# EUROPEAN PATENT APPLICATION

(11) **EP 2 851 561 A1**
(43) Date of publication of application: **25.03.2015**
(21) Application number: 14179305.9
(22) Date of filing: 31.07.2014
(51) Int. Cl.: F03D 11/00

(54) **Monitoring of wind turbine performance**

(30) Priority: 18.09.2013 US 201314029887
(71) Applicant: Siemens Aktiengesellschaft, 80333 München (DE)
(72) Inventor: Clausen, Palle, 300 Jelling (DK); Nielsen, Kaj Skov, Issaquah, 98027 (US)

(57) **Abstract**

A method for monitoring performance of an electricity generating system of a wind turbine is presented. A set of reference data is provided. The set of reference data is indicative of a correspondence between a performance parameter and at least two operational parameters. Measurement values for the performance parameter and the at least two operational parameters are received. The received measurement values and the set of reference data are compared. It is determined whether the measurement values deviate from the reference data.

## Description

### FIELD OF INVENTION

The present invention relates to the field of electricity production systems comprising wind turbines, in particular to a device and a method of monitoring performance of such systems.

### BACKGROUND OF INVENTION

Efficiently analyzing the performance of large numbers of individual wind turbines can take a long time and be a complex task because each wind turbine may have terrain, wake, sheer or other conditions that are unique to the given location. This means that there is a high likelihood that small changes in the performance, specifically deterioration in the performance, can be very difficult to detect before it has been going on for some time, thereby potentially causing a loss of revenue or a loss of expected life time of the equipment (e.g. due to increased wear of the equipment).

Current approaches to performance monitoring involves manually studying power curves (i.e. 2D plots of power as a function of wind speed) for individual wind turbines or groups of wind turbines. In order to more accurately represent the performance, the data used for display of the power curves may be pressure and temperature compensated. The data may also be corrected for altitude or air density. When analyzing performance for a specific yaw direction, a new 2D plot may be made based on filtered data only representing the specified yaw direction. For a wind turbine located in complex terrain with wake conditions from up wind turbines, this may result in a large number of individual 2D plots. Furthermore, power curves for the same wind turbine may look quite different depending on the wind speed and yaw direction distribution. This makes comparison of performance difficult and time consuming, and requires a high degree of training.

Monitoring performance of turbine sub systems typically consists of comparing a measured value to a set of warning and alarm trigger points. There can be trigger points for the measured value being larger than the trigger points or for the measured value being smaller than the trigger points. A few alarms or warnings may depend on two or more variables, such as high temperature and vibration, or high ambient temperature and production level.

In order to improve the competitiveness of wind power in relation to other forms of energy production, such as solar power or fossil fuels, the time it takes to identify a deteriorating performance of wind turbines needs to be reduced as much as possible and the task needs to be automated as far as possible, so that a single operator is able to monitor more installed MW.

### SUMMARY OF INVENTION

Thus, there may be a need for an improved way of monitoring wind turbine performance, including performance of single wind turbines, multiple wind turbines and wind turbine subsystems.

This need may be met by the subject matter according to the independent claims. Advantageous embodiments of the present invention are described by the dependent claims.

According to a first aspect of the invention there is provided a method of monitoring performance of an electricity generating system comprising a wind turbine. The described method comprises (a) providing a set of reference data, the set of reference data being indicative of a correspondence between a performance parameter and at least two operational parameters, (b) receiving measurement values for the performance parameter and the at least two operational parameters, (c) comparing the received measurement values and the set of reference data, and (d) determining whether the measurement values deviate from the reference data.

This aspect of the invention is based on the idea that measured values of a performance parameter and at least two operational parameters are compared with a set of reference data which is indicative of an expected or desired correspondence between the performance parameter and the at least two operational parameters. By determining whether the measured values deviate from the corresponding values (or value ranges) of the set of reference data, complex dependencies between the performance parameter and the at least two operational parameters may be taken into account when monitoring the performance of an electricity generating system, such as a wind park. Thereby, determination of whether variations in the measured value of the performance parameter are caused by variations in the operating parameters or by defects, wear or the like within the wind park is significantly facilitated.

In the present context, the term "electricity generating system comprising a wind turbine" may in particular denote an electricity producing facility comprising one or more wind turbines, e.g. a single wind turbine, a wind park comprising a plurality of wind turbines, or a hybrid facility comprising wind turbine(s) and at least one other type of generator (e.g. tidal, storage, coal or solar power).

In the present context, the term "set of reference data" may in particular denote a set of data comprising a plurality of performance parameter reference values and a plurality of reference values of each of the at least two operational parameters.

In the present context, the term "correspondence" may in particular denote a relation between the performance parameter and the at least two operational parameters in the sense that a particular value or range of values of the performance parameter is related to, i.e. corresponds to a particular combination of values of the operational parameters.

In the present context, the term "performance parameter" may in particular denote a parameter which is suitable for directly or indirectly indicating or quantifying a level of performance for the electricity generating system or certain parts thereof.

In the present context, the term "operational parameter" may in particular denote parameters which may influence performance of the electricity generating system or certain parts thereof. More specifically, the operational parameters may represent given or adjustable external or internal conditions which can influence the operation of the electricity generating system or certain parts thereof and thereby influence the performance of the same.

It should be noted that some parameters can be chosen as either performance parameters or operational parameters in dependency of the circumstances.

In the present context, the term "measured values" may in particular denote values obtained by use of measurement equipment, such as sensors.

In the present context, the term "deviate" may in particular denote that the measurement values for the performance value and the at least two operational parameters do not fulfill the correspondence or relation indicated by the set of reference data. More specifically, the measurement values deviate from the reference data when the measurement value for the performance parameter deviate from a value indicated by the reference data as corresponding to the measurement values of the at least two operational parameters.

According to this aspect of the present invention, a set of reference data is provided, which for a given combination of values of the at least two operational parameters indicate a corresponding reference value or range of reference values for the performance parameter. By comparing measurement values, e.g. current values obtained by measurement during operation of the system including possibly systematic corrections of such measurements, with the reference data, it is determined whether the measurement value of the performance value deviate from the value which according to the reference data corresponds to the measurement values of the at least two operational parameters. Thus, it can be determined whether a given (measured) value for the performance parameter fulfills the relation with the operational parameters as defined by the reference data. Thereby, complex relationships between the performance parameter and operational parameters can automatically be taken into account when evaluating performance without the need for a significant amount of manual operator labor related to manually studying a plurality of 2D plots.

According to an embodiment of the invention, the method further comprises generating a warning signal if it is determined that the measurement values deviate from the reference data.

The warning signal may cause notification of an operator, e.g. by displaying a corresponding message on a control console or by generating a corresponding audio signal. Alternatively or additionally, the warning signal may cause automatic actions to be taken, such as shut down of certain parts of the system, adjustment of operational parameters etc.

According to a further embodiment of the invention, the reference data define an upper limit and/or a lower limit for the performance parameter as a function of the at least two operational parameters.

In other words, for a given combination of values for the at least two operational parameters, the reference data may define an upper limit for the performance parameter, a lower limit for the performance parameter or both an upper limit and a lower limit (i.e. a range) for the performance parameter.

Accordingly, a set of measured values of the performance parameter and the at least two operational parameters deviate from the reference data if the measured value of the performance parameter exceeds the upper limit corresponding to the measured values of the at least two operational parameters. Similarly, a set of measured values of the performance parameter and the at least two operational parameters deviate from the reference data if the measured value of the performance parameter is below the lower limit corresponding to the measured values of the at least two operational parameters. Finally, in the case of both an upper limit and a lower limit, a set of measured values of the performance parameter and the at least two operational parameters deviate from the reference data if the measured value of the performance parameter is not within the range defined by the upper limit and lower limit corresponding to the measured values of the at least two operational parameters.

In one embodiment, one combination of conditions can have multiple trigger levels each assigned warnings and/or alarm states.

For example:
Under performance alarm (critical)
Under performance warning (needs attention)
Over performance warning (critical)
Over performance alarm (needs attention)

According to a further embodiment of the invention, the set of reference data is provided by (a) repeatedly measuring corresponding values of the performance parameter and the at least two operational parameters, (b) processing the measured values, and (c) storing the processed values.

In other words, the set of reference data is provided by measuring corresponding values of the performance parameter and the at least two operational parameters at regular intervals over a given period of time, e.g. one day, three days, one week, two weeks, three weeks, a month, two months, three months or even longer. The regular intervals, i.e. the measurement frequency, may e.g. be every 1 second, 2 seconds, 5 seconds, 10 seconds, 15 seconds, 30 seconds, 1 minute, 2 minutes, 5 minutes, 10 minutes, 15 minutes, 30 minutes, 1 hour or even longer. The measured values are processed to establish a correspondence between values of the performance parameter and values of the at least two operational parameters. The processing may involve averaging and/or determining of maximum and minimum for the measured values of the performance parameter for each measured combination of values of the operational parameters. The processing may further involve extrapolation in order to provide reference data for combinations of values that have not been directly measured. Finally, the processed values are stored, e.g. in a relational database or other suitable data structure.

By measuring a high number of corresponding values of the performance parameter and the at least two operational parameters over a period of time, reference data representing a wide variety of values of the operational parameters (i.e. operational conditions and settings) can be obtained.

Thus, the obtained reference data will be representative for most situations that may occur during operation of the electricity generating system or parts thereof.

The reference data may advantageously be updated at regular intervals and/or at the discretion of an operator. For example, if an operator notices that larger changes in the surrounding landscape occur, such as building construction or demolition or removal of a part of a wood, etc., the operator may consider it appropriate to modify the reference data to take such changes into account or even generate completely new reference data. In other words the above described repeated measurement phase may be repeated at a later stage in order to modify or replace the reference data.

According to a further embodiment of the invention, the performance parameter relates to performance of a wind turbine subsystem, performance of a single wind turbine, or performance of a plurality of wind turbines.

Depending on the particular electricity generating system, it may be useful to monitor performance of a wind turbine subsystem, such as a yaw or pitch regulating system, performance of a single wind turbine and/or performance of a plurality of wind turbines, e.g. in connection with a wind park.

According to a further embodiment of the invention, the at least two operational parameters relate to environmental conditions and/or to adjustable parameters of a wind turbine.

In the present context, the term "environmental conditions" may include non-controllable physical parameters, such as pressure, turbulence, wind shear, temperature, humidity, time of day, season, etc.

In the present context, the term "adjustable parameters" may include controllable physical parameters, such as load, yaw angle, pitch angle, rotational speed, etc.

According to a further embodiment of the invention, the performance parameter is power produced by a single wind turbine or total power produced by a plurality of wind turbines, and wherein the at least two operational parameters comprise a wind speed and a wind direction.

By relating the power produced by a wind turbine to the parameters wind speed and wind direction, it becomes possible to evaluate whether a drop in produced power is caused by a malfunction (damage, wear) or by the fact that another (upwind) wind turbine or some topologic feature of the surrounding terrain is influencing the amount of wind applied to the turbine for a given wind direction.

Thereby, a highly automated and thus time-efficient evaluation of the produced power can be obtained. Accordingly, extensive manual labor can be prevented and the risk of false alarms significantly reduced.

According to a second aspect of the invention there is provided a device for monitoring performance of an electricity generating system comprising a wind turbine. The described device comprises (a) a memory adapted to store a set of reference data, the set of reference data being indicative of a correspondence between a performance parameter and at least two operational parameters, (b) a measurement unit adapted to provide measurement values for the performance parameter and the at least two operational parameters, and (c) a processing unit adapted to (c1) compare the measurement values and the set of reference data, and (c2) determine whether the measurement values deviate from the reference data.

This aspect of the invention is generally based on the same idea as the first aspect discussed above. Accordingly, the device according to this aspect is capable of determining whether variations in the measured value of the performance parameter are caused by variations in the operating parameters or by defects, wear or the like within the wind park in a highly automated and effective manner.

In the present context, the term "measurement unit" may denote a set of sensors adapted to measure the measurement values or it may denote in interface adapted to collect data from sensors arranged at various positions within and/or in the vicinity of the electricity generating system. In the latter case, the interface may be adapted to receive the measurement values through a communication network, such as a LAN.

Depending on the application, the device may a stand-alone device or it may be integrated in a larger control system, such as a park pilot.

According to an embodiment of the invention, the device further comprises a warning unit adapted to generate a warning signal if it is determined that the measurement values deviate from the reference data.

The warning unit may be adapted to notify an operator, e.g. by displaying a corresponding message on a display or by generating a corresponding audio signal. Alternatively or additionally, the warning signal may cause automatic actions to be taken, such as shut down of certain parts of the system, adjustment of operational parameters, etc.

According to a further embodiment of the invention, the device further comprises a display unit adapted to generate (a) a 3D-representation of at least a part of the reference data, and/or (b) a 3D-representation of at least a part of the measurement values, and/or (c) a 3D-representation of a difference between at least a part of the reference data and at least a part of the measurement values.

By studying a 3D-representation of at least a part of the reference data on the display unit, an operator will be able to obtain an overview of the relation between performance parameter and operational parameters. Such an overview can provide useful information to the operator and allow the operator to interpret alarm signals in certain situations.

Similarly, a 3D-representation of the measured (current) performance parameter and operational parameters allows the operator to quickly identify a certain situation.

A 3D-representation of a difference between measurement values and reference data, i.e. a set of data obtained by subtracting the reference performance parameter values from the measurement performance values for corresponding values of the operational parameters, can assist an operator in rapidly identifying a group or selection of operational parameter values, where the measured performance parameter values differ significantly from the performance parameter values of the reference data. If no such regions exist, i.e. if the measured performance parameter values are substantially equal to the corresponding reference performance parameter values, the 3D-representation will e.g. be a plane shape.

The 3D-representation provides a substantial amount of information to the operator in cases where the operator needs to consider how to respond to an alarm signal.

According to a further embodiment of the invention, the processing unit is further adapted to (a) apply modeling or measurement correction to the measurement values, (b) compare the corrected measurement values and the set of reference data, and (c) determine whether the corrected measurement values deviate from the reference data.

In some cases correction may not be necessary (zero correction) while in other cases the modeling/correction may involve complex calculations that take e.g. environmental conditions and parameters into account.

According to a third aspect of the invention there is provided a wind park. The described wind park comprises (a) a plurality of wind turbines, and (b) a device according to the second aspect or any of the above embodiments, wherein the device is adapted to monitor each wind turbine of the plurality of wind turbines.

This aspect of the invention is essentially based on the same idea as the preceding aspects and thus provides a wind park with efficient and rapid monitoring of wind turbine performance.

According to a fourth aspect of the invention there is provided a computer program comprising computer executable instructions which when executed by a computer causes the computer to perform the method according to the first aspect or any of the above embodiments.

According to a fifth aspect of the invention there is provided a computer program product comprising a computer readable data carrier loaded with the computer program according to the fourth aspect.

The fourth and fifth aspects constitute software implementations of the method according to the first aspect. Thereby, computer hardware already present in e.g. a wind park may easily be upgraded to implement the advantageous performance monitoring functions of the above aspects and embodiments.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

### BRIEF DESCRIPTION OF THE DRAWINGS

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.
Figure 1 shows an overview of a wind park and a monitoring device in accordance with an embodiment.
Figure 2A shows a 3D power curve for a wind turbine in accordance with an embodiment.
Figure 2B shows a 2D tonal map representation of the power curve of Figure 2A.
Figure 3A shows a 3D representation of a difference between the power curve of Figure 2 and a nominal power curve.
Figure 3B shows a 2D tonal map representation of the 3D graph of Figure 3A.
Figure 4A shows a 3D power curve for another wind turbine in accordance with an embodiment.
Figure 4B shows a 2D tonal map representation of the power curve of Figure 4A.
Figure 5A shows a 3D representation of a difference between the power curve of Figure 4A and a nominal power curve.
Figure 5B shows a 2D tonal map representation of the 3D graph of Figure 5A.

### DETAILED DESCRIPTION OF INVENTION

The illustration in the drawing is schematic. It is noted that in different figures, similar or identical elements are provided with the same reference numerals or with reference numerals which differ only within the first digit.

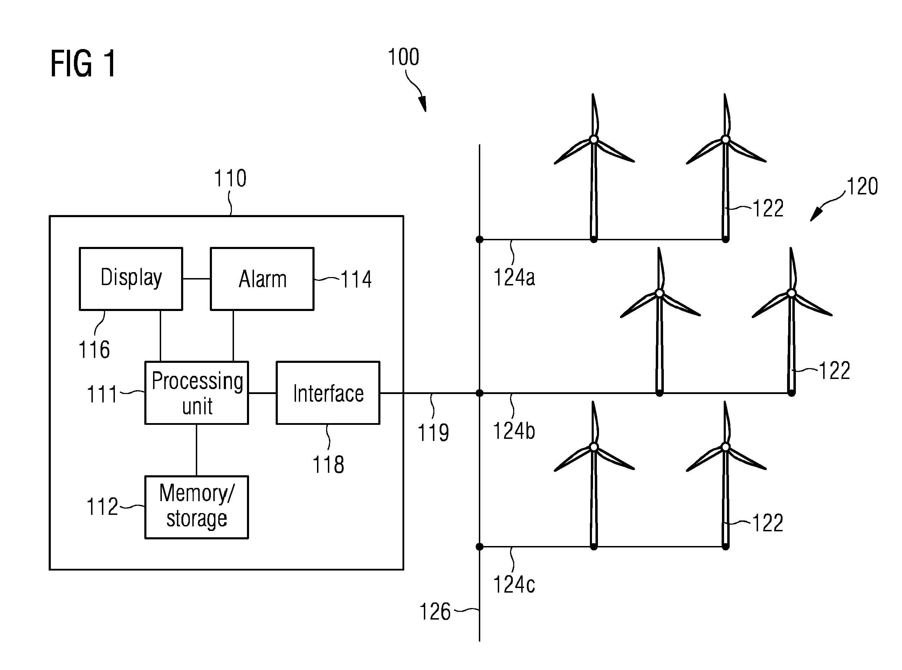

Figure 1 shows an overview 100 of a wind park 120 and a monitoring device 110 in accordance with an embodiment.

More specifically, the wind park 120 comprises a plurality of wind turbines 122. The wind turbines 122 are connected to a wind park communication network 126 via connecting cables 124a, 124b, and 124c. The monitoring device 110 comprises a processing unit 111, memory/storage 112, alarm unit 114, display unit 116 and interface 118. The processing unit is connected with memory/storage 112 such that programs and data can be read from the memory/storage 112 and data can be written to the memory/storage 112. The processing unit 111 is further connected to the alarm unit 114 and to the display unit 116. Finally, the processing unit is connected to the interface 118 which in turn is connected to the wind park communication network 126 via connecting cable 119.

The monitoring device 110 has two modes of operation: a reference data collecting/updating mode and a monitoring mode. In the reference data collecting/updating mode, measurement data from sensors at the wind turbines 122 and elsewhere in the wind park 120 are collected at regular intervals by the processing unit 111 via interface 118 and wind park communication network 126. The collected measurement data are processed (averaging, interpolation etc.) and stored as reference data in memory/storage 112. The collected reference data represent a set of corresponding measurement values for a wide variety of situations and conditions (e.g. during a period as long as three months or more) and thereby what may be considered "normal" behavior for each of the wind turbines 122. More specifically, the measurement values may include measurements (for each wind turbine 122) of parameters like power, pitch angle, rotational speed of rotor, yaw angle, wind speed, G-sensor magnitude, temperature, air pressure, humidity, etc.

In the monitoring mode, the collected reference data (see above) are used as follows. One of the parameters, e.g. power, is chosen as an indicator for performance (performance parameter) and at least two other parameters are chosen as operational parameters, i.e. parameters that may influence the performance parameter. The choice may be stored in the memory/storage 112 as one of possibly more monitoring profiles prepared by an operator. Now current measurement values of the performance parameter (e.g. power) and the operational parameters (e.g. yaw angle and wind speed) are collected by the processing unit 111 via the interface 118 and stored in memory/storage 112. The processing unit compares the collected measurement values with the reference data and determines whether a significant deviation exists. If this is the case, the processing unit transmits a corresponding message to the alarm unit 114. The alarm unit 114 generates an alarm signal which causes an alarm message to be displayed on the display unit 116 and/or that an alarm sound is emitted by a loudspeaker (not shown), or in other ways distributed, such that the attention of an operator is drawn to the situation. At the same time, the processing unit 111 transmits image data corresponding to one or more 3D visualizations of the reference data and/or measurement values to the display unit 116. These 3D visualizations are supposed to assist the operator in determining how to handle the alarm, i.e. the fact that the measurement data deviate from the reference data. The following drawings show various examples of such 3D visualizations as well as simplified 2D tonal maps thereof.

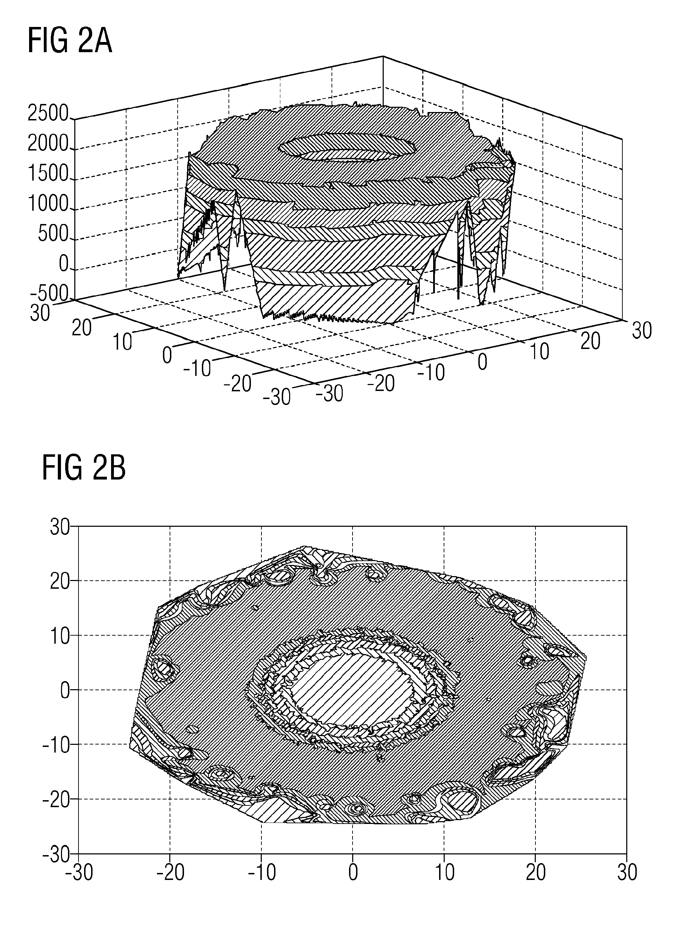

Figure 2A shows a 3D power curve for a wind turbine in accordance with an embodiment. More specifically, the figure shows power as a function of wind speed and yaw angle (corresponding to wind direction) for an essentially flawless wind turbine. As can be seen, the wind turbine produces a large amount of power in a substantially regular (ringshaped) region of the plot. Accordingly, the relation between power and wind speed appears to be essentially equal for all yaw angles, such that it is fair to assume that this particular wind turbine is neither exposed to obstacles in any particular direction, nor does is have any performance deteriorating faults.

Figure 2B shows a 2D tonal map representation of the power curve of Figure 2A. As can be seen, the power is relatively low in the elliptic central region where the wind speed is also low. For higher wind speeds, the power output is high until a certain level of the wind speed.

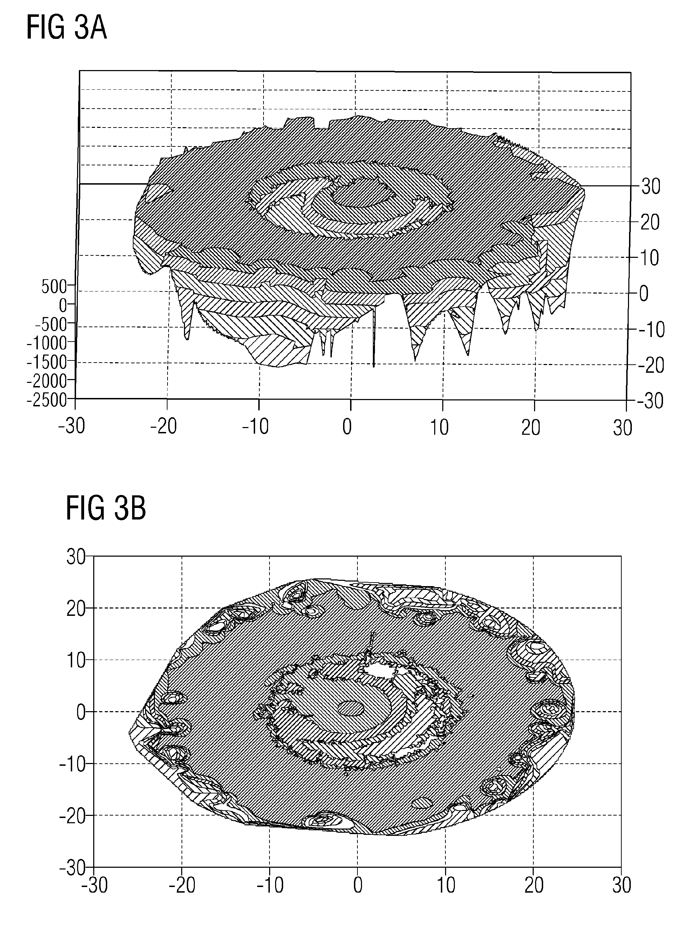

Figure 3A shows a 3D representation of a difference between the measured power curve shown in Figure 2A and a nominal power curve. As can be seen, the wind turbine produces nominal power or more in a fairly regular (dark) region.

Again, figure 3B shows a 2D tonal map representation of the 3D graph of Figure 3A.

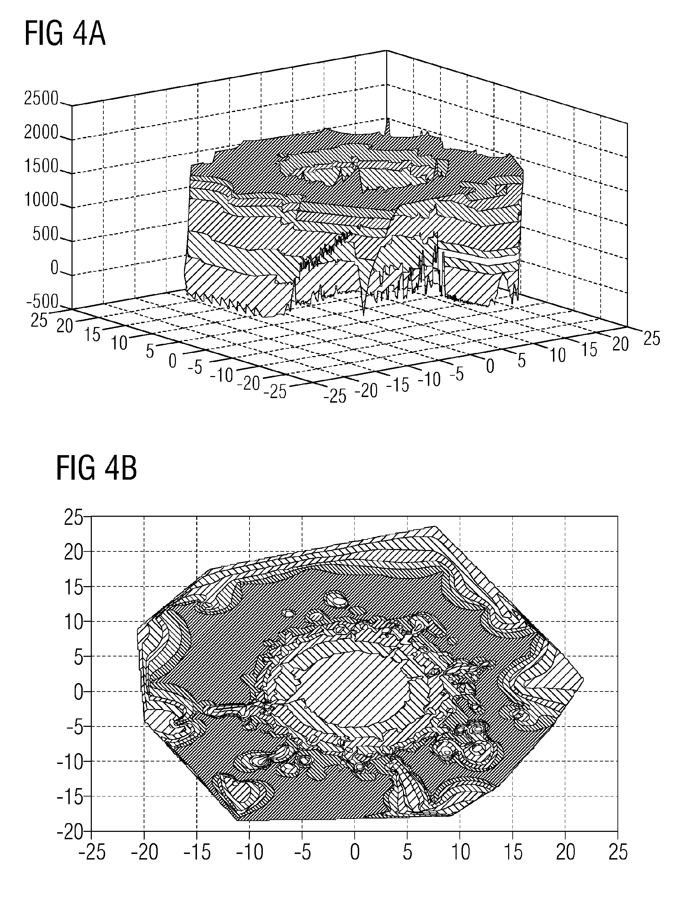

Figure 4A shows a 3D power curve for another wind turbine in accordance with an embodiment. As opposed to the 3D power curve shown in Figure 2A, this one is less regular and shows significant power falloff in several regions. Accordingly, this wind turbine either experiences some performance limiting influence from surrounding objects (other wind turbines, terrain, etc.) or it is faulty.

Figure 4B shows a 2D tonal map representation of the power curve of Figure 4A. Again, in comparison to the significantly more regular shape of Figure 2B, this map shows several irregular deformations and power drops.

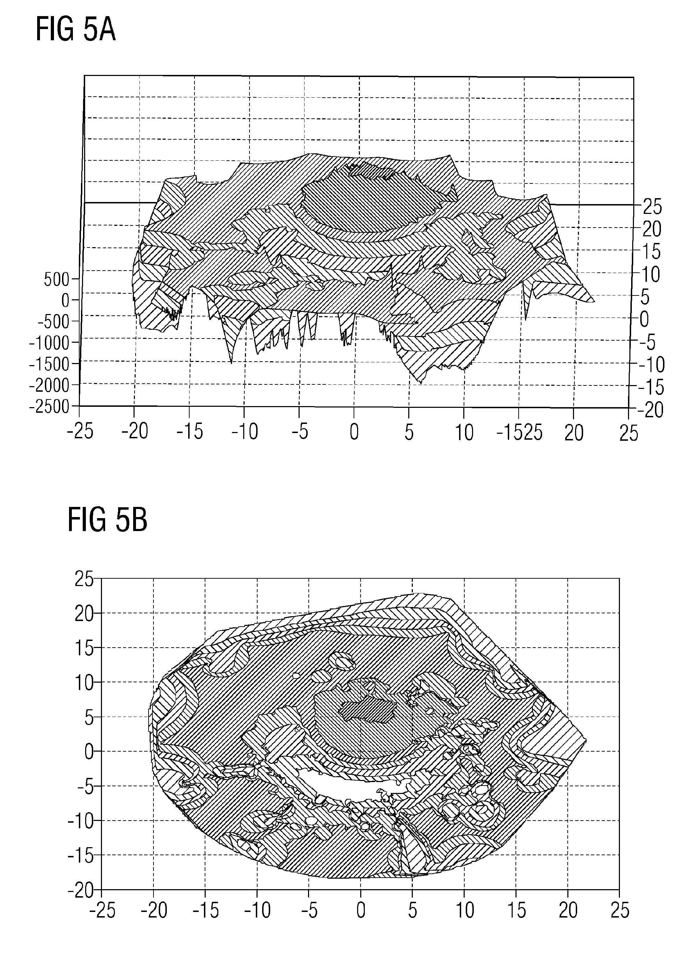

Figure 5A shows a 3D representation of a difference between the power curve of Figure 4A and a nominal power curve. Again, the contrast to corresponding Figure 3A is significant and it is clear that the power curve of Figure 4A deviates significantly from the nominal power curve.

Figure 5B shows a 2D tonal map representation of the 3D graph of Figure 5A. In comparison to the significantly more regular shape of Figure 3B, this map emphasizes the deviation even more.

By introducing 3D performance plots as discussed above, some of the previously extremely cumbersome comparisons become much easier and simpler. The 3D power curve shows the difference in performance based on yaw direction, and for some yaw directions it will be clear that the turbine is not able to produce as much at high wind speed as it can at other yaw directions. Explanations may vary, but if the causes are associated with the terrain or the locations of nearby turbines or structures, such directional reduced performance should be expected to be consistent from time period to time period. So if the operator can be spared time to sit and try to evaluate these location specific impacts repeatedly, it will save a lot of time.

When a turbine has been installed and all is calibrated correctly (pitch, yaw direction, wind measurement, etc.), the performance monitoring tool or device shall learn or be assigned a "performance mask" unique to this specific turbine on this specific location. The mask may consist of two simple circles at nominal power in the ideal situation, or it may consist of an inner circle at nominal plus an outer "circle" at nominal power with a large number of indentations where the turbine for local reasons is not able to perform up to nominal power quite up to the same drop off wind speed. The mask may contain additional circles at other power levels with more complex shapes. Or it can simply be a matrix of xyz-coordinates below which the performance monitoring tool shall set a warning or an alarm to the operator that this specific turbine is under-performing under these specific conditions.

If the "performance mask" is to be learned, then the "performance mask" is frozen after some learning and the values learned will form the foundation for issuing warnings or alarms from that time and forward.

Performance can refer to many different variables, and the plots in Figures 2A to 5B focus on Power Performance. It could also be interesting for an operator to look at performance of a sub system. For this, other 3D plots may be generated in order to monitor such sub systems and create similar 3D masks for generating alarms or warnings for suboptimal performance of sub systems. Some 3D performance masks may have a warning below the defined mask, where others may have to have a warning above a learned or assigned performance mask.

Exemplary Turbine Level performance Masks:
Power / pitch / RPM
Yaw / wind / power std
Yaw / wind / G sensor magnitude
Yaw / wind / life time consumption
Yaw / wind / revenue
Power / volt / MVAr
P avail / P actual / G sensor magnitude

Exemplary Plant Level performance Masks:
Power / volt / MVAr
Power / MVAR / THD
Power / volt / THD
Wind / yaw / power price
Wind / yaw / curtailment
Power / voltage / freq. std
Power / MVAR / line loss (P delivered - Turbine sum)
Turbine ID / Met wind direction / yaw direction turbine (normal operation.)

By freely being able to create new 3D presentations of plant or turbine variables and assigning a > (larger than) mask or a < (less than) mask for each presentation, the system will accommodate monitoring of the performance of new sub-systems, and monitoring variables or combinations of variables that have not yet been identified as being of specific interest for the optimization of the plant overall performance. As the wind industry matures and the power trading markets evolve there may also be a different focus on financial performance under varying situations. This same tool may be useful for such performance monitoring.

A different way to present the data would be to show the 3D deviation from the norm curve. (If there is no deviation at all it will be represented as a totally flat terrain.) All deviations will show up as hills for over performance and valleys for areas with under performance. By doing this, even more attention will be drawn to areas of concern for the operator. A "performance mask" set for a derivative value may be of equal or even in some cases higher interest for the operator. A corresponding example is shown in figures 5A and 5B and discussed above.

An example of a relevant derivative value could be for comparing an actual temperature to a model temperature for the same component. Being able to model a derivative is important partly because temperature values can have very long time constants given the very large thermal masses in a wind turbine, so just comparing actual values may lead to very confusing plots. Temperature plots would have to be based on a modeled value representing the expected temperature given all the conditions present at the turbine for the appropriate time period. (A derived temperature value may include power level, ambient temperature, wind speed, cooling condition, etc. Modeled temperature data for main components like gearboxes, generators, converters, transformers, nacelle etc. may be of special interest.)

The invention lies among others in implementation of software capable of alerting an operator to changes in the performance of a wind power plant, a wind turbine or a wind turbine sub system without spending a lot of operator time identifying the specific conditions where the performance has changed. This means that the operator can achieve higher performance or reduced wear on a larger fleet of turbines. The performance monitoring system contains a multidimensional view of the performance which can accommodate expected variations in the performance during different conditions such that the general alarm and warning criteria for the remaining conditions can be set to tighter criteria. An example being that the power curve monitoring viewed in a 3D space can account for wake of an upwind wind turbine resulting in a lower production during specific wind directions and specific wind speeds. With this directional view, the compliance with the power curve during the remaining yaw directions can be monitored with a tighter tolerance before a warning is issued. This will be necessary in order to monitor impact of various rotor enhancements like vortex generators and dino-tails ® etc., and it may be important for detecting potential build-up of ice or snow on the rotor or other rotor surface contamination or roughness.

A further example: A mask triggering warnings if the voltage distribution between turbines as a function of power falls outside the typical distribution may indicate a change in the grid impedance or a failure of VAR support equipment.

Plotting the following:
Turbine ID / Turbine Power / Turbine voltage reference.

Another example: A mask triggering a warning if the frequency begins to vary more than normal for the given condition may indicate that there is a grid instability developing, and some level of intervention can be expected from the grid operator.

Plotting the following :
Power / voltage / freq. std
Time of week / Total production / freq. std.

A yet further Example: Monitoring the performance of the yaw system may be interesting in order to possibly intervene during periods where a single turbine experiences an activation pattern that is highly unusual for a given conditions.

Plotting the following :
Yaw direction / power / yaw activations

During high wind conditions or very turbulent wind conditions the yaw activation count may be elevated. An operator may choose to lower a turbine output temporarily in order to extend the life time of the yaw system, if a warning indicating such condition is readily available while it is happening and not after the fact as a data analysis function. The high yaw activation count may indirectly indicate rough operating conditions for the specific turbine at such time, and reducing the power reference or the RPM may be a desirable option, or if the plant is already curtailed for other reasons then further reduce the power on such a turbine operating under very adverse conditions and letting a different turbine pick up the difference. This could result in a longer combined lifetime of the equipment and thus improving the competitiveness of wind power to other energy sources.

Summarizing, the present invention relates to:
1. A method for defining a performance mask based on multiple variables. For example, a power curve based on yaw direction.
2. A method of comparing the actual performance to the performance mask and issuing warnings or alarms.
3. A method of automatically "learning" the appropriate performance mask for the specific location.
4. A method of editing the performance mask manually.
5. A method of activating and deactivating the comparison function between the actual measured data and the stored performance mask.
6. A method of defining a performance mask based on a derivative of measured values.
7. A method of defining a performance mask for wind turbine sub-systems.
8. A method of defining a performance mask for the wind power plant level.
9. A method of modeling.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method for monitoring performance of an electricity generating system comprising a wind turbine, comprising:
providing a set of reference data, the set of reference data being indicative of a correspondence between a performance parameter and at least two operational parameters;
receiving measurement values for the performance parameter and the at least two operational parameters;
comparing the received measurement values and the set of reference data; and
determining whether the measurement values deviate from the reference data.

2. The method according to claim 1, further comprising generating a warning signal if the measurement values deviate from the reference data.

3. The method according to claim 1, wherein the reference data define an upper limit and/or a lower limit for the performance parameter as a function of the at least two operational parameters.

4. The method according to claim 1, wherein the set of reference data is provided by:
repeatedly measuring corresponding values of the performance parameter and the at least two operational parameters,
processing the measured values, and
storing the processed values.

5. The method according to claim 1, wherein the performance parameter relates to performance of a wind turbine subsystem, performance of a single wind turbine, or performance of a plurality of wind turbines.

6. The method according to claim 1, wherein the at least two operational parameters relate to environmental conditions and/or to adjustable parameters of the wind turbine.

7. The method according to claim 1, wherein the performance parameter is power produced by a single wind turbine or total power produced by a plurality of wind turbines, and wherein the at least two operational parameters comprise a wind speed and a wind direction.

8. A device for monitoring performance of an electricity generating system comprising a wind turbine, comprising:
a memory adapted to store a set of reference data, the set of reference data being indicative of a correspondence between a performance parameter and at least two operational parameters;
a measurement unit adapted to provide measurement values for the performance parameter and the at least two operational parameters; and
a processing unit adapted to
compare the measurement values and the set of reference data, and
determine whether the measurement values deviate from the reference data.

9. The device according to claim 8, further comprising a warning unit adapted to generate a warning signal if the measurement values deviate from the reference data.

10. The device according to claim 8, further comprising a display unit adapted to generate:
a 3D-representation of at least a part of the reference data, and/or
a 3D-representation of at least a part of the measurement values, and/or
a 3D-representation of a difference between at least a part of the reference data and at least a part of the measurement values.

11. The device according to claim 8, wherein the processing unit is further adapted to:
apply modeling or measurement correction to the measurement values,
compare the corrected measurement values and the set of reference data, and
determine whether the corrected measurement values deviate from the reference data.

12. The device according to claim 8, wherein the device is adapted to monitor each wind turbine of a wind park comprising a plurality of wind turbines.

13. A computer readable data carrier, comprising:
a computer program executable on a computer for performing a method according to claim 1.
